# EUROPÄISCHE PATENTSCHRIFT

(11) **EP 3 461 929 B1**
(45) Veröffentlichungstag und Bekanntmachung des Hinweises auf die Patenterteilung: **31.03.2021**
(21) Anmeldenummer: 18194972.8
(22) Anmeldetag: 18.09.2018
(51) Int. Cl.: C23C 28/04, C23C 4/11, C23C 4/18, B01J 37/02, F01N 3/28

(54) **ABGASANLAGE**
EXHAUST GAS SYSTEM
INSTALLATION DE GAZ D'ÉCHAPPEMENT

(30) Priorität: 29.09.2017 DE 102017122696
(43) Veröffentlichungstag der Anmeldung: 03.04.2019
(73) Patentinhaber: Eberspächer Exhaust Technology GmbH & Co. KG, 66539 Neunkirchen (DE)
(72) Erfinder: Gaiser, Gerd, 72768 Reutlingen (DE); Weller, Bernd, 73568 Durlangen (DE)
(74) Vertreter: Ruttensperger Lachnit Trossin Gomoll

(56) Entgegenhaltungen:
- EP-A1- 0 898 643
- US-A- 5 721 188
- US-A1- 2009 185 968
- US-A1- 2016 074 809

## Beschreibung

Die vorliegende Erfindung betrifft eine Abgasanlage.

Um den Schadstoffausstoß der in Fahrzeugen als Antriebsaggregate eingesetzten Brennkraftmaschinen, insbesondere Diesel-Brennkraftmaschinen, zu mindern, ist es bekannt, dem Abgasstrom ein Reaktionsmittel, im Allgemeinen eine Harnstoff/Wasser-Lösung, beizumischen, und bei einer selektiven katalytischen Reduktion (SCR) den Stickoxidanteil im Abgas zu senken. Der für die Durchführung einer selektiven katalytischen Reduktion in einem SCR-Katalysator erforderliche Ammoniak wird durch die Beimengung des Reaktionsmittels bereitgestellt. In dem in den Abgasstrom eingespritzten Reaktionsmittel, also beispielsweise eine Harnstoff/Wasser-Lösung, erfolgt durch den Kontakt mit dem heißen Abgas bzw. mit der Oberfläche von abgasführenden Komponenten einer Abgasanlage zunächst eine Verdunstung bzw. Verdampfung zumindest eines Teils des darin enthaltenen Wassers. In einer thermischen Zersetzung entstehen aus dem Harnstoff Ammoniak und Isocyansäure. In einer an einem Hydrolysekatalysator durchgeführten hydrolytischen Reaktion wird aus der Isocyansäure und dem zuvor verdunsteten bzw. verdampften Wasser Ammoniak gebildet. Ein derartiger Hydrolysekatalysator kann beispielsweise dadurch bereitgestellt werden, dass in einem Teilbereich eines SCR-Katalysators ein im Allgemeinen aus Keramikmaterial aufgebautes Substrat mit für eine Hydrolyse katalytisch wirksamem Material, wie zum Beispiel Titanoxid (TiO₂), beschichtet ist.

Eine Abgasanlage gemäß dem Oberbegriff des Anspruchs 1 ist aus der WO 97/43528 A1 bekannt. Auf Komponenten der Abgasanlage, welche stromaufwärts bezüglich eines SCR-Katalysators positioniert sind, wird eine Katalysatorbeschichtung aufgebracht, um die Zersetzung des in einer Harnstoff/Wasser-Lösung enthaltenen Harnstoffs zur Bereitstellung von Ammoniak zu unterstützen. Zum Bereitstellen des Katalysators kann auf eine Stahloberfläche in einem Plasmasprühverfahren Aluminiumoxid als einen Basis-Materiallage aufgebracht werden. Auf diese Basis-Materiallage kann dann katalytisch wirksames Material, wie zum Beispiel Aluminiumoxid, in einem Tauchbeschichtungsverfahren aufgebracht werder

US5721188A offenbart eine abgasführende Edelstahl-Komponente für eine Verbrennungskraftmaschine, aufweisend eine mittels Plasmaspritzens aufgetragene Unterschicht aus Aluminiumoxid und eine mittels Tauch- oder Spritzverfahrens katalytisch wirksame keramische Oberschicht z.B. ein Pt/Pd/Rhenthaltendes Aluminium- oder Zirkonoxid.

US 2009/185968A1 offenbart eine Abgasanlagekomponente aufweisend eine Unterschicht aus AlCrO und eine katalytisch wirksame Oberschicht aus Pt/Pd/Rh-enthaltendes Aluminiumoxid.

US2016/074809A1 offenbart eine Abgasanlagekomponente für Dieselsysteme, enthaltend ein doppellagiges keramisches Washcoat aus YSZ.

Es ist die Aufgabe der vorliegenden Erfindung, eine im Betrieb stabile Abgasanlage für eine Brennkraftmaschine bereitzustellen, mit welcher eine verbesserte Aufbereitung des in einen Abgasstrom eingespritzten Reaktionsmittels insbesondere für eine selektive katalytische Reduktion erreicht wird.

Die eingangs genannte Aufgabe wird gelöst durch eine Abgasanlage für eine Brennkraftmaschine, vorzugsweise für ein Fahrzeug, gemäß Anspruch 1. Diese umfasst wenigstens eine abgasführende Komponente mit einer

Katalysatorbeschichtung, wobei die Katalysatorbeschichtung eine Basis-Materiallage und auf der Basis-Materiallage eine katalytisch wirksame Materiallage umfasst.

Um eine stabile Verbindung zwischen den beiden Materialanlagen zu unterstützen, bestehen die Basis-Materiallage und die katalytisch wirksame Materiallage aus dem gleichen Aufbaumaterial.

Die für die beiden Materiallagen geforderten unterschiedlichen Eigenschaften werden dadurch bereitgestellt, dass die Basis-Materiallage und die katalytisch wirksame Materiallage mit zueinander unterschiedlicher Kristallstruktur aufgebaut sind.

Die Basis-Materiallage ist für eine stabile Haftwechselwirkung mit der diese tragenden Komponente einer Abgasanlage mit Titanoxid mit einer Rutil-Kristallstruktur aufgebaut. Die katalytisch wirksame Materiallage ist mit Titanoxid mit einer Anatas-Kristallstruktur aufgebaut.

Ein Verfahren zur Herstellung einer derartigen Abgasanlage für eine Brennkraftmaschine kann die Maßnahmen umfassen:
a) Bereitstellen wenigstens einer abgasführenden Komponente für die Abgasanlage,
b) Aufbringen einer Basis-Materiallage auf wenigstens einen Bereich einer Oberfläche wenigstens einer der abgasführenden Komponenten in einem Hochtemperaturaufbringungsverfahren,
c) Aufbringen einer katalytisch wirksamen Materiallage auf die Basis-Materiallage in einem Niedertemperaturaufbringungsverfahren.

Gemäß dem Verfahren wird eine Katalysatorbeschichtung als mehrlagige Beschichtung aufgebracht, wobei eine der Lagen als in einem Hochtemperaturaufbringungsverfahren aufgebrachte Basis-Materiallage insbesondere auch dann, wenn die zu beschichtete Komponente nicht aus Keramikmaterial besteht sondern mit Metallmaterial aufgebaut ist, eine sehr gute Haftwirkung bereitstellt und auch unter thermisch anspruchsvollen Bedingungen nicht zum Loslösen von der Oberfläche der beschichteten Komponente neigt. Dies trifft auch und insbesondere dann zu, wenn als Aufbaumaterial der Basis-Materiallage ein Material verwendet wird, das grundsätzlich selbst eine katalytische Wirkung entfalten kann. Die in einem Niedertemperaturaufbringungsverfahren aufgebrachte katalytisch wirksame Materiallage zeigt einerseits eine sehr starke katalytische Wirksamkeit, und neigt andererseits aufgrund der Haftvermittlungswirkung der Basis-Materiallage ebenfalls nicht zum Loslösen von der beschichteten Komponente.

Gemäß einem besonders vorteilhaften Aspekt kann vorgesehen sein, dass bei der Maßnahme a) eine abgasführende Komponente aus Metallmaterial bereitgestellt wird, oder/und dass bei der Maßnahme a) ein Rohr als abgasführende Komponente bereitgestellt wird oder/und ein Mischer als abgasführende Komponente bereitgestellt wird. Dies bedeutet, dass bei einer mit dem Verfahren hergestellten Abgasanlage die für die verbesserte Aufbereitung einer als Reaktionsmittel eingesetzten Harnstoff/Wasser-Lösung katalytisch durchzuführende Hydrolyse losgelöst vom Aufbau eines SCR-Katalysators bereits in einem Bereich stromaufwärts eines SCR-Katalysators erfolgen kann, so dass das für einen SCR-Katalysator bereitgestellte Volumen einer Abgasanlage ausschließlich für die selektive katalytische Reduktion genutzt werden kann und der dafür erforderliche und aus dem Reaktionsmittel generierte Ammoniak bereits stromaufwärts des SCR-Katalysators im Bereich von Komponenten, welche dort ohnehin vorhanden sind, wie zum Beispiel in einem abgasführenden Rohr oder/und einem Mischer, bereitgestellt wird.

Bei der Maßnahme b) wird Titanoxid (TiO₂) mit einer Rutil-Kristallstruktur als Basis-Materiallage aufgebracht.

Um bei der Maßnahme b) eine ausreichend hohe Temperatur bei der Aufbringung der Basis-Materiallage gewährleisten zu können, wird vorgeschlagen, dass die Basis-Materiallage mit einem Flammspritz-Verfahren oder einem Plasmaspritz-Verfahren aufgebracht wird. Bei einem derartigen Aufbringungsverfahren wird eine Aufbringungstemperatur von deutlich über 1000 °C erreicht.

Bei der Maßnahme c) kann Keramikmaterial als katalytisch wirksame Materiallage aufgebracht werden. Hierzu wird Titanoxid mit einer Anatas-Kristallstruktrur als katalytisch wirksame Materiallage aufgebracht.

Gemäß einem eine stabile Verbindung zwischen der Basis-Materiallage und der katalytisch wirksamen Materiallage begünstigenden, besonders vorteilhaften Aspekt des Verfahrens ist zum Erhalt des erfindungsgemäßen Aufbaus einer Abgasanlage vorgesehen, dass bei der Maßnahme b) die Basis-Materiallage und bei der Maßnahme c) die katalytisch wirksame Materiallage jeweils mit dem gleichen Aufbaumaterial aufgebracht werden. Aufgrund der Aufbringung in unterschiedlichen Verfahren entwickeln die beiden Materiallagen grundsätzlich unterschiedliche Eigenschaften, welche im Falle der Basis-Materiallage eine stabile Haftwechselwirkung mit einer insbesondere aus Metallmaterial aufgebauten Materiallage unterstützen und im Falle der katalytisch wirksamen Materiallage die katalytische Wirkung begünstigen.

Bei der Maßnahme c) kann die katalytisch wirksame Materiallage in einem Tauchverfahren oder einem Spritzverfahren aufgebracht werden. Bei derartigen Verfahren übersteigt die Temperatur des aufgebrachten Materials Werte im Bereich von wenigen 100 °C im Allgemeinen nicht.

Bei der Maßnahme b) beträgt im Hochtemperaturaufbringungsverfahren die Temperatur des für die Basis-Materiallage aufzubringenden Materials vorzugsweise wenigstens 1000 °C oder/und ist vorzugsweise derart hoch, dass das aufzubringende Material wenigstens bereichsweise aufgeschmolzen wird. Bei der Maßnahme c) kann vorzugsweise vorgesehen sein, dass im Niedertemperaturaufbringungsverfahren die Temperatur des für die katalytisch wirksame Materiallage aufzubringenden Materials 600 °C, vorzugsweise 500 °C, nicht übersteigt.

Um die Haftverbindung zwischen dem Aufbaumaterial der Basis-Materiallage und der zu beschichtenden Komponente weiter zu verbessern, wird vorgeschlagen, dass die Maßnahme a) eine Maßnahme a1) zum Entfetten einer bei der Maßnahme b) zu beschichtenden Oberfläche oder/und zum Erhöhen der Oberflächenrauigkeit einer bei der Maßnahme b) zu beschichteten Oberfläche, vorzugsweise durch Sandstrahlen, umfasst.

Nach Durchführung der Maßnahme c), also wenn die Katalysatorbeschichtung mit ihren beiden Materiallagen auf zumindest eine Komponente aufgebracht ist, kann die wenigstens eine mit einer Basis-Materiallage und einer katalytisch wirksamen Materiallage beschichtete Komponente derart mit weiteren Abgasanlagenkomponenten zusammengesetzt werden, dass sie stromabwärts einer Reaktionsmittelabgabeanordnung und stromaufwärts eine SCR-Katalysatoranordnung positioniert ist.

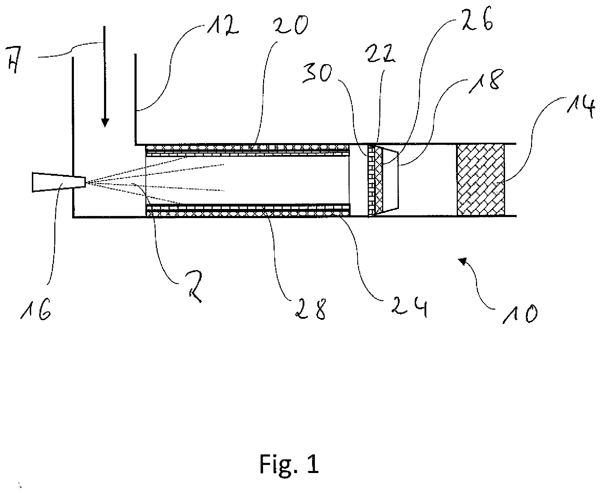

Die vorliegende Erfindung wird nachfolgend mit Bezug auf die Fig. 1 detailliert beschrieben, welche in prinzipieller Darstellung eine Abgasanlage bzw. einen Teil einer Abgasanlage für eine Brennkraftmaschine eines Fahrzeugs zeigt.

In Fig. 1 ist eine Abgasanlage für eine Brennkraftmaschine eines Fahrzeugs allgemein mit 10 bezeichnet. Die in Fig. 1 abschnittsweise dargestellte Abgasanlage 10 nimmt das von einer Brennkraftmaschine ausgestoßene Abgas A auf und leitet dieses beispielsweise in Richtung zu einem oder mehreren in der Fig. 1 nicht dargestellten Schalldämpfern weiter. Die Abgasanlage 10 umfasst als eine abgasführende Komponente ein im Allgemeinen aus Metallmaterial, wie z. B. Stahlblech, aufgebautes Rohr 12, das beispielsweise auch aus mehreren zusammengefügten Rohrabschnitten bestehen kann.

Die Abgasanlage 10 umfasst ferner zur Verringerung des im Abgas A enthaltenen Stickoxidanteils eine SCR-Katalysatoranordnung 14. Stromaufwärts bezüglich der SCR-Katalysatoranordnung 14 ist eine Reaktionsmittelabgabeanordnung 16 angeordnet, allgemein auch als Injektor bezeichnet, durch welche ein Reaktionsmittel R in Form eines Sprühkegels in das im Rohr 12 strömende Abgas A eingespritzt wird. Im Allgemeinen ist das durch die Reaktionsmittelabgabeanordnung 16 eingespritzte Reaktionsmittel R eine Harnstoff/Wasser-Lösung.

Um eine bessere Durchmischung von Abgas A und Reaktionsmittel R herbeizuführen, ist in Strömungsrichtung stromabwärts bezüglich der Reaktionsmittelabgabeanordnung 16 und stromaufwärts bezüglich der SCR-Katalysatoranordnung 14 ein allgemein mit 18 bezeichneter Mischer vorgesehen. Der Mischer 18 kann eine Mehrzahl von den Abgasstrom umlenkenden Schaufeln bzw. Umlenkflächen aufweisen, um somit eine Verwirbelung und durch diese eine bessere Durchmischung von Abgas A und Reaktionsmittel R herbeizuführen.

Das durch die Reaktionsmittelabgabeanordnung abgegebene Reaktionsmittel R, also die Harnstoff/Wasser-Lösung, wird beim Einspritzen in das Rohr 12 durch den Kontakt mit dem Abgas A bzw. auch dem durch den Abgasstrom erwärmten Rohr 12 oder dem Mischer 18 gleichermaßen erwärmt, so dass das in der Harnstoff/WasserLösung enthaltene Wasser größtenteils verdunstet bzw. verdampft. Aufgrund der Erwärmung erfährt der Harnstoff eine thermische Zersetzung, wobei im Wesentlichen Isocyansäure und Ammoniak entstehen. Der Ammoniak ist für die an der weiter stromabwärts positionierten SCR-Katalysatoranordnung 14 ablaufende selektive katalytische Reduktion erforderlich. Um die Ammoniakausbeute zu verbessern, wird in einer katalytisch induzierten Hydrolysereaktion die Isocyansäure mit dem zuvor verdampften bzw. verdunsteten Wasser zu Ammoniak umgesetzt. Um diese Hydrolysereaktion zu induzieren, ist in der Abgasanlage 10 im dargestellten Beispiel an der Innenumfangsfläche des Rohrs 12 und am Mischer 18 eine Katalysatorbeschichtung 20, 22 vorgesehen, welche einen Hydrolysekatalysator bereitstellt.

Die auf das Rohr 12 bzw. den Mischer 18 aufgebrachte Katalysatorbeschichtung 20, 22 umfasst jeweils zwei Materiallagen. Eine auf die zu beschichtende Oberfläche des Rohrs 12 bzw. des Mischers 18 aufgebrachte Basis-Materiallage 24, 26 ist dafür vorgesehen, eine gute Haftwirkung der Katalysatorbeschichtung 20, 22 auf die im Allgemeinen aus Metallmaterial aufgebauten und jeweilige abgasführende Komponenten der Abgasanlage 10 bereitstellenden Komponenten Rohr 12 bzw. Mischer 18 zu erreichen. Auf die Basis-Materiallage 24, 26 ist jeweils eine katalytisch wirksame Materiallage 28, 30 aufgebracht, welche vorzugsweise die Basis-Materiallage 24, 26 im Wesentlichen vollständig überdeckt und eine katalytisch wirksame Oberfläche bereitstellt, welche in Kontakt mit dem durch die Reaktionsmittelabgabeanordnung 16 eingespritzten Reaktionsmittel R bzw. den durch Verdampfung bzw. Thermolyse generierten Bestandteilen desselben tritt. Dabei kann beispielsweise die am Rohr 12 vorgesehene Katalysatorbeschichtung 20 derart positioniert werden, dass gewährleistet ist, dass im Wesentlichen kein in Form des Sprühkegels abgegebenes Reaktionsmittel R in Kontakt mit einem weiter stromaufwärts positionierten und nicht mit der Katalysatorbeschichtung überdeckten Oberflächenbereich des Rohrs 12 tritt.

Um bei der erfindungsgemäß aufgebauten bzw. hergestellten Abgasanlage 10 die vorangehend angesprochene gute Haftwirkung für die Basis-Materiallage 24, 26 zu erreichen, kann zunächst in einer vorbereitenden Arbeitsmaßnahme die zu beschichtende Oberfläche des Rohrs 12 bzw. des Mischers 18 gereinigt, insbesondere entfettet werden und zur Erhöhung der Oberflächenrauigkeit beispielsweise durch Sandstrahlen bearbeitet werden.

Auf den so vorbereiteten Oberflächenbereich des Rohrs 12 bzw. des Mischers 18 wird dann die Basis-Materiallage 24, 26 aufgebracht. Die Basis-Materiallage 24, 26 besteht aus Titanoxid (TiO₂). Gemäß den Prinzipien der vorliegenden Erfindung wird die aus keramischem Material aufgebaute Basis-Materiallage in einem

Hochtemperaturaufbringungsverfahren aufgebracht, welches beispielsweise dadurch definiert sein kann, dass bei einem derartigen Hochtemperaturaufbringungsverfahren das aufzubringende Material zumindest bereichsweise eine Temperatur von wenigstens 1000 °C erreicht, um dieses zumindest lokal aufzuschmelzen. Beispielsweise kann die Basis-Materiallage 24, 26 aus Titanoxid in einem Flammspritz-Verfahren oder einem Plasmaspritz-Verfahren aufgebracht werden, wobei eine Prozesstemperatur von bis zu über 3000°C erreicht wird und somit die Schmelztemperatur von Titanoxid von etwa 1800 °C deutlich überschritten wird. Die Aufbringung der Basis-Materiallage 24, 26 mit einem derartigen Hochtemperaturaufbringungsverfahren führt zu einer sehr guten Haftwechselwirkung zwischen der Oberfläche der zu beschichtenden Komponente, also beispielsweise dem Rohr 12 bzw. dem Mischer 18, und dem Aufbaumaterial der Basis-Materiallage 24, 26. Es wird angenommen, dass bei derartiger Aufbringung von Titanoxid in einem Hochtemperaturaufbringungsverfahren sich das Titanoxid mit einer Rutil-Kristallstruktur, also so genanntes Rutil, bildet. Die Prozesstemperatur bzw. die Temperatur des aufzubringenden Materials der Basis-Materiallage 24, 26, die bei einem Hochtemperaturaufbringungsverfahren erreicht werden muss bzw. zu überschreiten ist, kann also auch dadurch definiert werden, dass die Temperatur derart hoch ist, dass das aufzubringende Material der Basis-Materiallage 24, 26 mit einer eine gute Haftwirkung insbesondere zu einem metallischen Untergrund gewährleistenden Kristallstruktur, wie dies bei Rutil im Falle von Titanoxid der Fall ist, ausgebildet wird.

Auf die Basis-Materiallage wird in einem nachfolgenden Arbeitsprozess in einem Niedertemperaturaufbringungsverfahren die katalytisch wirksame Materiallage aufgebracht. Auch diese ist aus Titanoxid aufgebaut.

Es wird gemäß der vorliegenden Erfindung für die katalytisch wirksame Materiallage 28, 30 das gleiche Aufbaumaterial, also Titanoxid, verwendet wie für die Basis-Materiallage 24, 26. Es hat sich gezeigt, dass dann eine besonders feste Verbindung zwischen der Basis-Materiallage 24, 26 und der darauf jeweils zu erzeugenden katalytisch wirksamen Materiallage 28, 30 erreicht werden kann.

Die Aufbringung der katalytisch wirksamen Materiallage 28, 30 in einem Niedertemperaturaufbringungsverfahren, wie z. B. einem Tauchverfahren oder einem Spritzverfahren, zeichnet sich gemäß den Prinzipien der vorliegenden Erfindung dadurch aus, dass Temperaturen, welche einen Temperaturbereich von 500 °C oder 600 °C übersteigen, im Allgemeinen nicht erreicht werden. Ein Tauchverfahren bzw. ein Spritzverfahren wird im Allgemeinen bei Raumtemperatur oder mit leicht über die Raumtemperatur erhöhter Temperatur durchgeführt. An einen derartigen Vorgang zum Aufbringen des Materials der katalytische wirksamen Materiallage 28,30 kann sich eine thermische Behandlung anschließen, bei welcher jedoch die vorangehend angegebene Temperatur im Bereich von 500 °C bis 600 °C nicht überschritten wird. Hier kann also beispielsweise ein Aufbringungsverfahren gewählt werden, welches zur Aufbringung von katalytisch wirksamen Materialien auf im Allgemeinen keramische Substrate von Katalysatoren verwendet wird.

Es ist davon auszugehen, dass bei Einsatz von Titanoxid als Aufbaumaterial auch für die katalytisch wirksame Materiallage 28, 30 diese mit einer Anatas-Kristallstruktur, also so genanntes Anatas, aufgebracht wird. Bei Temperaturen von 700 bis 900°C geht die Anatas-Kristallstruktur in die Rutil-Kristallstruktur über. Da im Niedertemperaturaufbringungsverfahren eine derart hohe Temperatur jedoch nicht erreicht wird, ist davon auszugehen, dass die katalytisch wirksame Materiallage 28, 30 aus Titanoxid mit einer Anatas-Kristallstruktur erzeugt wird bzw. erhalten bleibt. Es hat sich gezeigt, dass die in einem Niedertemperatur-Aufbringungsverfahren aufgebrachte katalytisch wirksame Materiallage, obgleich sie aus dem gleichen Aufbaumaterial besteht wie die Basis-Materiallage, einen deutlich höheren Wirkungsgrad der katalytisch induzierten Reaktion erreicht, was im Allgemeinen darauf zurückzuführen ist, dass die im Niedertemperaturaufbringungsverfahren erzeugte katalytisch wirksame Materiallage eine deutlich rauere bzw. zerklüftetere Oberfläche aufweist, als die im Hochtemperaturaufbringungsverfahren generierte Basis-Materiallage und somit eine wesentlich größere katalytisch wirksame Oberfläche bereitstellt.

Durch das Aufbringen der Katalysatorbeschichtung 20, 22 auf abgasführende Komponenten, also das Rohr 12 bzw. den Mischer 18, in einem Bereich stromaufwärts der SCR-Katalysatoranordnung 14, wird gewährleistet, dass bereits in diesem Strömungsbereich bzw. Volumenbereich eine effiziente Aufbereitung des Reaktionsmittels R und somit ein hoher Anteil an Ammoniak für die in der SCR-Katalysatoranordnung 14 durchzuführende selektive katalytische Reduktion erreicht werden kann. Es ist somit nicht erforderlich, in der SCR-Katalysatoranordnung 14 selbst einen Volumenbereich dafür vorzusehen, zunächst in einer katalytischen Hydrolyse eine Umsetzung des Reaktionsmittels R in Ammoniak durchzuführen, so dass das für die selektive katalytische Reduktion bereitgestellte Volumen der SCR-Katalysatoranordnung 14 effizienter genutzt werden kann.

Durch das Bereitstellen der Katalysatorbeschichtung 20, 22 in einem Bereich stromaufwärts der SCR-Katalysatoranordnung 14, insbesondere in demjenigen Bereich, in welchem für eine gute Durchmischung des Reaktionsmittels R mit dem Abgas A gesorgt werden soll, wird weiterhin aufgrund der effizient durchgeführten katalytischen Hydrolysereaktion die Entstehung von Nebenprodukten, welche Ablagerungen an abgasführenden Komponenten bilden können, weitestgehend unterbunden.

Zum Aufbau der Katalysatorbeschichtung 20 bzw. 22 bei einer nicht erfindungsgemäßen Ausgestaltung anderes keramisches Material, wie z. B. Aluminiumoxid (Al₂O₃) eingesetzt werden. Auch aus derartigem Keramikmaterial kann zunächst in einem Hochtemperaturaufbringungsverfahren, beispielsweise in einem Flammspritz-Verfahren oder einem Plasmaspritz-Verfahren eine Basis-Materiallage 24, 26 aus Aluminiumoxid gebildet werden. Auch diese im Hochtemperaturaufbringungsverfahren auf die ggf. in der vorangehend beschriebenen Art und Weise vorbehandelte Oberfläche des Rohrs 12 bzw. des Mischers 18 aufgebrachte Basis-Materiallage aus Aluminiumoxid zeigt eine außerordentlich starke Haftwirkung an derartigen aus Metallmaterial aufgebauten abgasführenden Komponenten. Es ist davon auszugehen, dass bei Aufbringung in einem Hochtemperaturaufbringungsverfahren so genanntes α-Aluminiumoxid gebildet wird. Auf diese Basis-Materiallage 24, 26 aus Aluminiumoxid wird dann in einem Niedertemperaturaufbringungsverfahren, also beispielsweise einem Tauchverfahren oder einem Spritzverfahren, die katalytisch wirksame Materiallage 28, 30 aufgebracht, wobei davon ausgegangen wird, dass dabei das vergleichsweise poröse γ-Aluminiumoxid gebildet wird, welches aufgrund seiner Porosität bzw. Rauigkeit eine sehr große katalytisch wirksame Oberfläche bereitstellt, andererseits jedoch eine sehr gute Verbindung mit dem Aufbaumaterial der Basis-Materiallage 24, 26 eingeht. Da eine Temperatur im Bereich von 800°C, bei welcher γ-Aluminiumoxid in α-Aluminiumoxid übergeht, bei dem Niedertemperaturaufbringungsverfahren nicht erreicht bzw. überschritten wird und auch nicht davon auszugehen ist, dass eine derart hohe Temperatur bei der Durchströmung mit Abgas erreicht werden kann, bleibt das Aufbaumaterial der katalytisch wirksamen Materiallage 28, 30 bei seiner im Niedertemperaturaufbringungsverfahren generierten Kristallstruktur, also im Falle von γ-Aluminiumoxid einer kubischen Kristallstruktur, welche sich grundsätzlich von der rhomboedrischen Kristallstruktur des α-Aluminiumoxids unterscheidet.

Es sei abschließend darauf hingewiesen bei einer nicht erfindungsgemäßen Ausgestaltung, dass auch beispielsweise Zirkonoxid (ZrO oder ZrO₂) in der vorangehend beschriebenen Art und Weise in zwei Materiallagen in einem Hochtemperaturaufbringungsverfahren und einem Niedertemperaturaufbringungsverfahren zur Bereitstellung der Katalysatorbeschichtung 20, 22 eingesetzt werden kann. Grundsätzlich ist, unabhängig von dem eingesetzten Keramikmaterial zur Bereitstellung der beiden Materiallagen durch den mehrschichtigen Aufbau, bei welchem beide Schichten grundsätzlich aus dem gleichen Aufbaumaterial, sich in der Kristallstruktur unterscheidend bereitgestellt sind, einerseits für eine sehr gute Haftwirkung an einer insbesondere aus Metallmaterial aufgebauten abgasführenden Komponente einer Abgasanlage gesorgt, andererseits für eine effiziente katalytische Reaktion an der mit Reaktionsmittel bzw. Bestandteilen davon in Kontakt tretenden Oberfläche gesorgt. Es hat sich gezeigt, dass auf praktisch alle Stahlsorten, insbesondere den für den Aufbau von abgasführenden Komponenten einer Abgasanlage eingesetzten Stahlsorten, mit einem derart geschichteten Aufbau eine sehr gute Verbindung der Katalysatorbeschichtung mit dem Aufbaumaterial der jeweiligen abgasführenden Komponente erreicht werden kann.

Wie bereits ausgeführt, wird eine derartige Beschichtung vorzugsweise an derartigen Stellen bzw. Komponenten vorgesehen, welche im Strömungsweg zwischen der Reaktionsmittel-Abgabeanordnung und der SCR-Katalysatoranordnung liegen und in Kontakt mit dem eingespritzten Reaktionsmittel treten. Dabei können derartige Komponenten nur bereichsweise oder auch vollständig mit der mehrlagigen Katalysatorbeschichtung überzogen werden. Ferner müssen nicht notwendigerweise alle im Abgasstrom liegenden bzw. diesen führenden Komponenten beschichtet sein. Beispielsweise könnte nur der Mischer oder nur das Rohr mit der Katalysatorbeschichtung beschichtet sein.

## Patentansprüche

1. Abgasanlage für eine Brennkraftmaschine, vorzugsweise für ein Fahrzeug, umfassend wenigstens eine abgasführende Komponente (12, 18) mit einer Katalysatorbeschichtung (20, 22), wobei die Katalysatorbeschichtung (20, 22) eine Basis-Materiallage (24, 26) und auf der Basis-Materiallage (24, 26) eine katalytisch wirksame Materiallage (28, 30) umfasst, wobei die Basis-Materiallage (24, 26) und die katalytisch wirksame Materiallage (28, 30) aus dem gleichen Aufbaumaterial bestehen und mit zueinander unterschiedlicher Kristallstruktur aufgebaut sind, **dadurch gekennzeichnet, dass** das Aufbaumaterial der Basis-Materiallage (24, 26) Titanoxid mit einer Rutil-Kristallstruktur ist und das Aufbaumaterial der katalytisch wirksamen Materiallage (28, 30) Titanoxid mit einer Anatas-Kristallstruktur ist.

## Claims

1. Exhaust system for an internal combustion engine, preferably for a vehicle, comprising at least one exhaust gas-carrying component (12, 18) with a catalyst coating (20, 22), wherein the catalyst coating (20, 22) comprises a basic material layer (24, 26) and a catalytically active material layer (28, 30) on the basic material layer (24, 26), wherein the basic material layer (24, 26) and the catalytically active material layer (28, 30) are made of the same construction material and are made with mutually different crystalline structures, **characterized in that** the construction material of the basic material layer (24, 26) is titanium oxide with a rutile crystalline structure and the construction material of the catalytically active material layer (28, 30) is titanium oxide with a anatase crystalline structure.

## Revendications

1. Système d'échappement pour un moteur à combustion interne, de préférence pour un véhicule, comprenant au moins un composant conduisant les gaz d'échappement (12, 18) avec un revêtement catalytique (20, 22), dans lequel le revêtement catalytique (20, 22) comprend une couche de matériau de base (24, 26) et une couche de matériau catalytiquement actif (28, 30) sur la couche de matériau de base (24, 26), dans lequel la couche de matériau de base (24, 26) et la couche de matériau catalytiquement actif (28, 30) sont constitués du même matériau de construction et sont réalisés avec des structures cristallines mutuellement différentes, **caractérisés en ce que** le matériau de construction de la couche de matériau de base (24, 26) est de l'oxyde de titane avec une structure cristalline de rutile et le matériau de construction de la couche de matériau catalytiquement actif (28, 30) est de l'oxyde de titane avec une structure cristalline d'anatase.
